# EUROPEAN PATENT APPLICATION

(11) **EP 3 499 380 A1**
(43) Date of publication of application: **19.06.2019**
(21) Application number: 18212105.3
(22) Date of filing: 12.12.2018
(51) Int. Cl.: G06F 16/242

(54) **PROVIDING BOTS FOR INDUSTRIAL PROCESSES**

(30) Priority: 14.12.2017 US 201715842421
(71) Applicant: Honeywell International Inc., Morris Plains, NJ New Jersey 07950 (US)
(72) Inventor: CHANDRASEKARAN, Rajesh, Morris Plains, NJ New Jersey 07950 (US); PILLAY, RAMESH, Morris Plains, NJ New Jersey 07950 (US); HANDA, Simran, Morris Plains, NJ New Jersey 07950 (US); KOLAPALLI, Sridhar, Morris Plains, NJ New Jersey 07950 (US); NEGI, Archna, Morris Plains, NJ New Jersey 07950 (US); MATHERNE JR., Harold C., Morris Plains, NJ New Jersey 07950 (US)
(74) Representative: Houghton, Mark Phillip

(57) **Abstract**

Devices, Systems, and methods for providing bots for industrial processes are described herein. One device includes instructions stored thereon which, when executed by a processor, cause the processor to monitor an industrial process, initiate a communication session with a user associated with the industrial process, receive a query made by the user during the communication session regarding a portion of the industrial process, and provide a response to the query during the communication session based, at least in part, on a current state of the industrial process.

## Description

### Technical Field

The present disclosure relates to devices, systems, and methods for providing bots for industrial processes.

### Background

Industries and/or businesses may perform processes such as monitoring, control, corrective actions, analysis, and/or maintenance, among others. Portions of these processes may be, to some degree, repetitive in nature. In many cases, engineers and/or maintenance personnel may be involved in performing such tasks. During that performance, questions and/or issues may arise that call for additional information.

In previous approaches, these questions and/or issues may be addressed with the assistance of manuals (e.g., installation manuals), other people, and/or external sources (e.g., the Internet). However, in previous approaches, the performance of the processes and the pathway(s) to obtaining the additional information needed to address questions and/or issues may be separate. The lack of interoperability seen in previous approaches can lead to increased delays, costs, and dedication of human resources.

### Brief Description of the Drawings

Figure 1 illustrates a system for providing bots for industrial processes in accordance with one or more embodiments of the present disclosure.
Figure 2 illustrates another system for providing bots for industrial processes in accordance with one or more embodiments of the present disclosure.
Figure 3 illustrates a computing device in accordance with one or more embodiments of the present disclosure.
Figure 4 illustrates a flow chart associated with providing bots for industrial processes in accordance with one or more embodiments of the present disclosure.

### Detailed Description

Providing bots for industrial processes is described herein. For example, one or more embodiments include a non-transitory computer-readable medium having instructions stored thereon which, when executed by a processor, cause the processor to monitor an industrial process, initiate a communication session with a user associated with the industrial process, receive a query made by the user during the communication session regarding a portion of the industrial process, and provide a response to the query during the communication session based, at least in part, on a current state of the industrial process.

Embodiments of the present disclosure can allow the creation, modification, and/or operation of bots for industrial processes. As referred to herein a "bot" is a set of computer-executable instructions (e.g., an application) for executing one or more processes and/or responding to user communication (e.g., voice and/or text communication). Processes can include, for instance, rules-based tasks. Some example processes can include monitoring (e.g., equipment monitoring), control (e.g., device, system, and/or process control), providing alerts, device, installation, performing corrective action, analysis, parcel delivery, invoicing, power management, and/or routine maintenance, among others. When executed, bots can automate tasks such that they are performed faster than a human operator. While "industrial" processes are discussed herein, it is to be understood that embodiments of the present disclosure are not so limited; processes can include business processes, commercial processes, enterprise processes, etc. Where the term "industrial process" is used herein, it is to be appreciated that such usage is intended to include the above types of processes in addition to industrial processes. Similarly, where the term "industrial system" is used herein, it is to be appreciated that such usage is intended to include other systems (e.g., commercial systems, monitoring systems, control systems, etc.) in addition to industrial systems.

Some previous approaches to performing industrial processes may not involve automation. These approaches may be costly in both time delays and human resources. Some previous approaches may involve some degree of automation but may not provide adequate interoperability between different applications. For instance, some previous approaches may provide a process bot executed to automate rules-based, repetitive, and/or mundane processes. In some cases, a chat bot may be separately operated and/or executed to receive queries and/or provide help. However, these two bots may be completely separated in that they may not share information, resources, and/or context. As a result, for example, when a chat bot is initiated by an engineer in need of assistance with an ongoing process, the engineer may be then tasked with providing information regarding the state of the process (e.g., device settings, error codes, installation date(s), etc.).

In contrast, embodiments of the present disclosure include what may be referred to as "composite bots" (sometimes referred to simply as "bots" that combine the operations of process bots with the capabilities of chat bots, and vice versa. Bots in accordance with embodiments herein can initiate other bots; for instance, a process bot can initiate another process bot, a process bot can initiate a chat bot, a chat bot can initiate another chat bot, and a chat bot can initiate a process bot. Additionally, bots discussed herein can contact humans (e.g., experts, agents, officers, engineers, etc.) to address issues. Further, different bots in accordance with embodiments herein can store, maintain, and/or share a state of a chat conversation and/or a state of a process. As a result, a chat bot, when initiated, may be immediately and automatically informed of the status of a given process, saving the engineer time and frustration. In an example, a field agent installing a system may be involved in a conversation with a chat bot, which may internally invoke a process to test the system and/or contact human assistance to provide a response to the field agent.

Additionally, embodiments of the present disclosure can enable more informed decision-making compared to previous approaches. For instance, bots can be utilized for site analysis, risk analysis, and/or marketing, among others. In some embodiments, one or more bots can be used to determine the overall composition and/or configuration of systems and/or devices of an industrial process. Bots can be utilized for marketing purposes through performance of product inventories and/or product life cycle analyses, for instance. In some embodiments, bots can collect operating information regarding servers, software, operating systems, applications, logs, traffic levels, field device types and/or configuration(s), networks, hardware, firmware, etc. With this information, bots can allow enhanced problem resolution, inventory management, life cycle planning, security, customer usage trends, etc.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that process, electrical, and/or structural changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure, and should not be taken in a limiting sense.

The figures herein follow a numbering convention in which the first digit or digits correspond to the drawing figure number and the remaining digits identify an element or component in the drawing. As used herein, "a" or "a number of" something can refer to one or more such things. For example, "a number of areas" can refer to one or more areas.

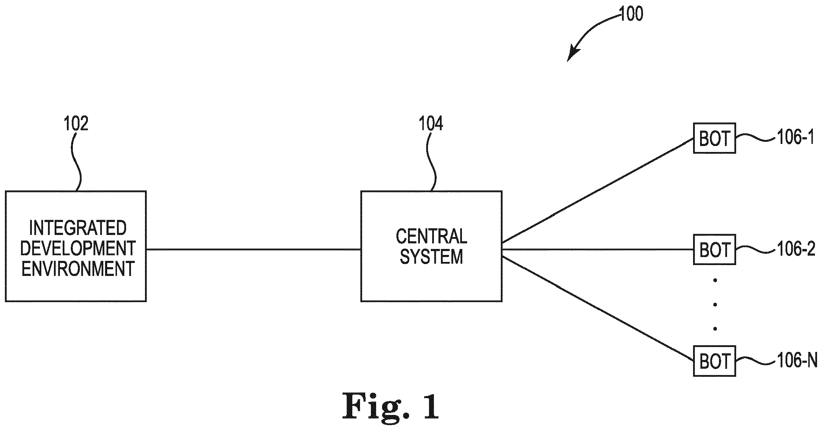

Figure 1 illustrates a system 100 for providing bots for industrial processes in accordance with one or more embodiments of the present disclosure. As shown in Figure 1, system 100 includes an integrated development environment ("IDE") 102, a central system 104, and a plurality of bots 106-1, 106-2,...106-N (sometimes cumulatively referred to as "bots 106"). The IDE 102 can be an interface configured to allow the creation of the bots 106. For instance the IDE 102 can receive workflows from an external source (not shown in Figure 1). A workflow, as referred to herein is a sequence of industrial, administrative, or other processes through which a piece of work passes from initiation to completion. A workflow can include a single process or a plurality or processes. A workflow can be automated by a bot (e.g., the execution of an application). The IDE 102 can additionally allow the creation of workflows and the testing of workflows. Stated differently, the IDE 102 can be an interface allowing the creation and/or modification of bots 106.

The central system 104 can be an application and/or repository that provides components utilized by the bots 106 before, during, or after execution. The central system 104 can allow management and/or control of the bots 106. In some embodiments, the central system 104 can be deployed remotely (e.g., cloud-based) and can provide capabilities to bots such as licensing, credentials, configuration(s), definitions, scheduling, metrics, logging, etc. In addition, the central system 104 can provide a dashboard allowing the visualization of the bots 106. The dashboard can display which bots 106 are scheduled for execution, and/or which bots are next in a queue for execution, for instance. In some embodiments, the dashboard can display statuses of bots 106 (e.g., active, inactive, etc.). The dashboard can display error messages associated with bots 106 and/or alerts associated with bots 106.

The bots 106 can be production instances (e.g., software applications) which can be executed by one or more computing devices. The bots 106 may be launched by a user and/or responsive to some other condition (e.g., the reception of an alert message (discussed below)). In some embodiments, bots can be executing as background applications. In some embodiments, the bots 106 can be hosted on top of one or more virtual machines (VMs). As referred to herein, bots 106 can be executed to perform a number of functions. As previously discussed, bots 106 can include chat bots which may be configured to respond to user queries and/or questions. Chat bots may provide "help" on one or more topics. In some embodiments, chat bots can respond to voice queries. In some embodiments, chat bots can respond to textual queries. In some embodiments, chat bots may provide audio responses. In some embodiments, chat bots may provide textual responses.

In some embodiments, one or more of the bots 106 can be process bots. Process bots can automate processes. In some embodiments, chat bots may be selected to automate rules-based, repetitive, and/or mundane processes. Process bots can be implemented in industrial and/or enterprise contexts. For example, a process bot can perform an annual audit of all employee records and a different process bot can perform routine network checks of a system of sensors in a building. It is noted that "building," as used herein, can refer to one or more buildings, enterprises, facilities, businesses, homes, plants, prisons, hospitals, refineries, etc.

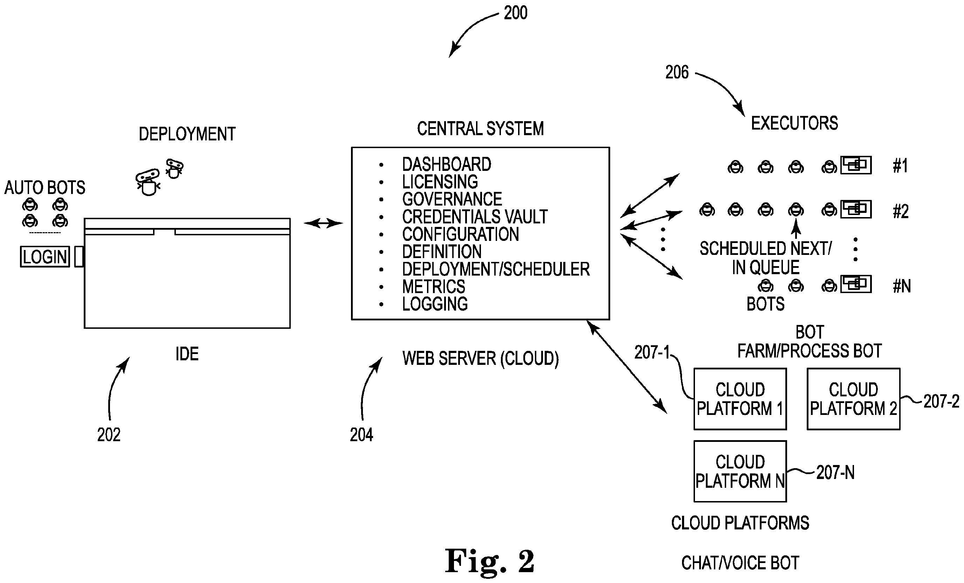

Figure 2 illustrates another system 200 for providing bots for industrial processes in accordance with one or more embodiments of the present disclosure. As shown in Figure 2, system 200 includes an integrated development environment ("IDE") 202, a central system 204, a plurality of bots 206, and a plurality of cloud platforms 207-1, 207-2,...207-N (sometimes cumulatively referred to as "cloud platforms 207"). The IDE 202 can be an interface configured to allow the creation of the bots 206. For instance the IDE 202 can receive workflows from an external source (not shown in Figure 2). The IDE 202 can additionally allow the creation of workflows and the testing of workflows. Stated differently, the IDE 202 can be an interface allowing the creation and/or modification of bots 206.

The central system 204 can be an application and/or repository that provides components utilized by the bots 206 before, during, or after execution. The central system 204 can allow management and/or control of the bots 206. The central system 204 can be deployed remotely (e.g., cloud-based) and, as shown in Figure 2, can provide capabilities such as, for example, a dashboard, licensing, governance, a credentials vault, security, configuration, definition(s), deployment, scheduling, metrics, and/or logging, among other capabilities. Though the example of cloud deployment is illustrated in Fig. 2, embodiments of the present disclosure are not so limited. Embodiments herein can be deployed to on-premise platforms (e.g., site systems), for instance. In an example, a device, such as an external storage device, can be introduced to a site computing system (e.g., a server) such as a building management system and/or a building video management system, for instance. The dashboard can allow visualization of the bots 206. The dashboard can display which bots 206 are scheduled for execution, and/or which bots are next in a queue for execution, for instance. In some embodiments, the dashboard can display statuses of bots 206 (e.g., active, inactive, etc.). The dashboard can display error messages associated with bots 206 and/or alerts associated with bots 206.

As previously discussed, the bots 206 can be production instances (e.g., software applications) which can be executed by one or more computing devices. The bots 206 may be launched by a user and/or responsive to some other condition (e.g., the reception of an alert message (discussed below)). In some embodiments, the bots 206 can be executing as background applications. In some embodiments, the bots 206 can be hosted on top of one or more virtual machines (VMs). In some embodiments, the bots 206 can be hosted by one or more of the cloud platforms 207. As referred to herein, bots 206 can be executed to perform a number of functions. As previously discussed, bots 206 can include chat bots which may be configured to respond to user queries and/or questions. Chat bots may provide "help" on one or more topics. In some embodiments, chat bots can respond to voice queries. In some embodiments, chat bots can respond to textual queries. In some embodiments, chat bots may provide audio responses. In some embodiments, chat bots may provide textual responses.

In some embodiments, one or more of the bots 206 can be process bots. Process bots can automate processes. In some embodiments, chat bots may be selected to automate rules-based, repetitive, and/or mundane processes. Process bots can be implemented in industrial and/or enterprise contexts. For example, a process bot can perform an annual audit of all employee records and a different process bot can perform routine network checks of a system of sensors in a building. It is noted that "building," as used herein, can refer to one or more buildings, enterprises, facilities, businesses, homes, plants, prisons, hospitals, refineries, etc.

In some embodiments, one or more bots 106 can generate reports. In some embodiments, one or more bots 106 can consolidate and/or manipulate data across a plurality of documents (e.g., spreadsheets). In some embodiments, one or more bots 106 can monitor received metrics, compare them to a threshold, and provide a report and/or initiate corrective action responsive to the metrics exceeding the threshold. In some embodiments, one or more bots 106 can analyze logs (e.g., log files). In some embodiments, one or more bots 106 can "crawl" through an application's different interfaces to test its usability. These examples are not to be taken in a limiting sense, and embodiments of the present disclosure do not limit bots to the performance of particular tasks and/or processes. In a more general sense, process bots can allow the automation of processes such as monitoring, control, alerts, analysis, taking corrective actions, performing maintenance, and others.

In accordance with the present disclosure, the bots 106 can combine the abilities of chat bots and process bots. A bot 106 can initiate other bots; for instance, a process bot can initiate another process bot, a process bot can initiate a chat bot, a chat bot can initiate another chat bot, and a chat bot can initiate a process bot. Additionally, the bots 106 discussed herein can contact humans (e.g., experts, agents, officers, engineers, etc.) to address issues. Further, different bots in accordance with embodiments herein can store and maintain a state of a chat conversation and/or a state of a process. As a result, a chat bot, when initiated, may be immediately and automatically informed of the status of a given process, saving the engineer time and frustration. In an example, a field agent installing a system may be involved in a conversation with a chat bot, which may internally invoke a process to test the system and/or contact human assistance to provide a response to the field agent.

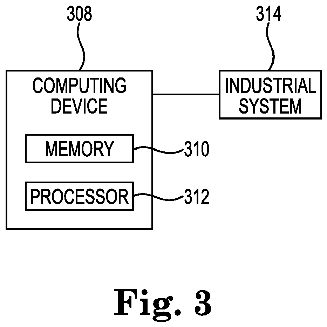

Figure 3 illustrates a computing device 308 in accordance with one or more embodiments of the present disclosure. The computing device 308 can be a portion of a building management system (BMS), though embodiments of the present disclosure are not so limited. The computing device 308 can include a memory 310 and a processor 312 configured to execute executable instructions stored in the memory 310 to perform various examples of the present disclosure, for example. That is, the memory 310 can be any type of non-transitory storage medium that can be accessed by the processor 312 to perform various examples of the present disclosure. For example, the memory 310 can be a non-transitory computer readable medium having computer readable instructions (e.g., computer program instructions) stored thereon that are executable by the processor 312.

The memory 310 can be volatile or nonvolatile memory. The memory 310 can also be removable (e.g., portable) memory, or non-removable (e.g., internal) memory. For example, the memory 310 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disc read-only memory (CD-ROM)), flash memory, a laser disc, a digital versatile disc (DVD) or other optical storage, and/or a magnetic medium such as magnetic cassettes, tapes, or disks, among other types of memory.

Further, although memory 310 is illustrated as being located within the computing device 108, embodiments of the present disclosure are not so limited. For example, memory 310 can also be located internal to another computing resource (e.g., enabling computer readable instructions to be downloaded over the Internet or another wired or wireless connection). In some embodiments, the memory 310 and/or the processor 312 can be located external to the computing device 108. The memory 310 can store the bots discussed herein.

In addition to, or in place of, the execution of executable instructions, various examples of the present disclosure can be performed via one or more devices (e.g., one or more controllers) having logic. As used herein, "logic" is an alternative or additional processing resource to execute the actions and/or functions, etc., described herein, which includes hardware (e.g., various forms of transistor logic, application specific integrated circuits (ASICs), etc.), as opposed to computer executable instructions (e.g., software, firmware, etc.) stored in memory and executable by a processor. It is presumed that logic similarly executes instructions for purposes of the embodiments of the present disclosure.

The computing device 308 can be in communication with, and/or provide control of, a number of industrial systems (illustrated cumulatively by "industrial system 314"). For example, the computing device 308 can be in communication with one or more devices associated with a public address system, a fire system, a lighting system, an HVAC system, an access control system, an elevator system, a surveillance system, a security system, etc.

The industrial system 314 can include a plurality of devices and/or components. For example, the industrial system 314 can include, for example, one or more computing devices (e.g., desktop computing devices, servers, etc.), communication devices (e.g., gateways) controllers, displays, alarms, smoke detectors, sensors (e.g., temperature sensors, pressure sensors, occupancy sensors, light sensors, etc.), lights, light emitting diodes (LEDs), blinds, shades, thermostats, variable air volume (VAV) devices, air handling units, humidifiers, dehumidifiers, fans, fan coil units, heat exchangers, compressors, evaporators, relays, locks, beacons, card readers, motors, door actuators, cameras, video cameras, etc. The above listing of devices of the industrial system 314 is provided for example purposes and is not to be taken in a limiting sense. An industrial process can include one or more of these systems and/or devices, and a bot executed by the computing device 308 can monitor that process and perform other operations, for instance.

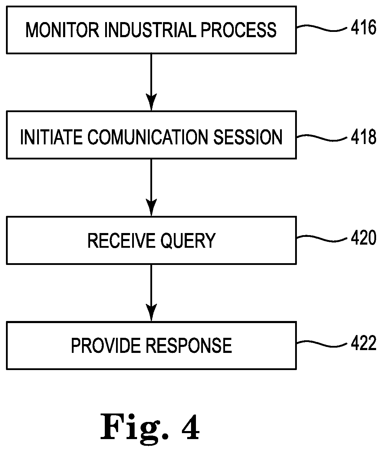

Figure 4 illustrates a flow chart associated with providing bots for industrial processes in accordance with one or more embodiments of the present disclosure. The flow chart can be carried out by one or more bots, for instance. At 416, a bot can monitor an industrial process. In some embodiments, monitoring can include receiving operating information directly from devices (e.g., sensors, computing devices, etc.). Such information can be received at a particular interval, for instance, and or in real time. In some embodiments, information can be received from a server or computing device associated with the industrial process. In some embodiments, the operating information can be received responsive to a triggering condition. For example, a triggering condition can include an alarm, the entry of the operating information into a computing device, and/or a received message (e.g., email). In some embodiments, operating information can be received via a screen scraping operation performed on a display device. In some embodiments, operating information can be received via a character recognition operation performed on a display device. In some embodiments, operating information can be received via an object recognition operation performed on a display device.

In an example, operating information can be received from a management system configured to manage one or more processes. The operating information received can include, for instance, server configuration data (e.g., server software component version data, operating system data, application data, etc.), server hardware component data (e.g., version), server log files (e.g., event files, point server log, client log, etc.), performance data (e.g., loading level, nominal traffic level, peak traffic level, etc.), field device data (e.g., quantities, performance data, channels, buses, networks, firmware version(s), etc.).

At 418, a communication session can be initiated with a user associated with the industrial process. As previously discussed, such a user may be an engineer, field agent, technician, and/or manager, though embodiments herein are not so limited. The communication session can be a chat window, in some embodiments, providing instant messaging capabilities. In some embodiments, the communication session can be a voice conversation enabled by text-to-speech functionalities (and vice versa). In some embodiments, the communication session can be initiated response to a user input. Such an input can include a request for help. In some embodiments, the communication session can be established responsive to the process exceeding a threshold. For example, if a device begins malfunctioning, a communication session can be established informing the user of the malfunction.

At 420, a query made by the user regarding a portion of the industrial process can be received during the communication session. In some embodiments, such a query can be a direct question (e.g., what version is the firmware of this device?). In some embodiments, the query can be a command (e.g., show me the configuration settings of the sensors in this network).

At 422, a response to the query can be provided during the communication session, and the response can be based, at least in part, on a current state of the industrial process. In contrast with previous approaches, a communication session, enabled by a chat bot, may not be informed of the process about which the user is inquiring. Because the communication session is linked with the current state of the industrial process being monitored, however, embodiments herein can empower the user with valuable information regarding the process. In some embodiments, for instance, a test on the process can be initiated and results provided during the communication session. In some embodiments, the bot can consult a different user (e.g., an expert) in order to answer a question posed by the initial user (e.g., what is the optimal placement for a wireless beacon in this network?).

In some embodiments, an aspect of the industrial process can be adjusted without user input. Such an adjustment can be made responsive to a determination that the operating information exceeds a threshold, for instance. In an example, a bot determines that a temperature setting of an air handling unit exceeds a threshold in that a temperature of a particular room exceeds a temperature threshold. In accordance with embodiments herein, a bot can automatically adjust the temperature setting accordingly. In some embodiments, the bot can initiate a communication session with a user to inform the user of the adjustment and/or to request feedback or acknowledgement.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

The numbered paragraphs below form part of the disclosure:
1. A non-transitory computer-readable medium having instructions stored thereon executable by a processor to:
   monitor an industrial process;
   initiate a communication session with a user associated with the industrial process;
   receive a query made by the user during the communication session regarding a portion of the industrial process; and
   provide a response to the query during the communication session based, at least in part, on a current state of the industrial process.
2. The medium of 1, including instructions to initiate the communication session responsive to a user input.
3. The medium of 1, including instructions to initiate the communication session responsive to the process exceeding a particular threshold.
4. The medium of 1, wherein the instructions to provide the response to the query include instructions to:
   initiate a test associated with the industrial process during the communication session; and
   provide a result of the test during the communication session.
5. The medium of 1, wherein the instructions to provide the response to the query include instructions to:
   pose a question associated with the query to a different user during the communication session;
   provide an answer given by the different user during the communication session.
6. The medium of 1, wherein the industrial process is an installation associated with a device.
7. The medium of 1, wherein the industrial process is a delivery of a parcel.
8. The medium of 1, wherein the industrial process is an invoice process.
9. The medium of 1, wherein the industrial process is a power management process.
10. A system for providing bots for industrial processes, comprising:
   a processor; and
   a memory having instructions stored thereon which, when executed by the processor, cause the processor to:
      determine operating information associated with an industrial process;
      establish a communication session with a user associated with the industrial process;
      receive a query made by the user during the communication session regarding a portion of the industrial process;
      provide a response to the query during the communication session based, at least in part, on the determined operating information associated with the industrial process; and
      adjust an aspect of the industrial process without user input responsive to a determination that the operating information associated with the industrial process exceeds a threshold.
11. The system of 10, including instructions to adjust a setting of a device involved in the industrial process.
12. The system of 10, wherein the instructions to determine the operating information of the industrial process include instructions to determine respective operating information associated with each of:
   a server associated with the industrial process;
   controllers associated with the industrial process;
   sensors associated with the industrial process; and
   communication devices associated with the industrial process.
13. The system of 10, wherein the instructions to determine the operating information of the industrial process include instructions to determine the operating information from a plurality of log files associated with, and shared by, the industrial process.
14. The system of 10, wherein the operating information associated with the industrial process is received from a system sharing the operating information, and wherein the system is at least one of:
   a fire system;
   a lighting system;
   a heating, ventilation, and air conditioning (HVAC) system;
   an access control system;
   an elevator system;
   a surveillance system;
   a security system; or
   a public address system.
15. A method for providing bots for industrial processes, comprising:
   receiving, via a bot executing on a computing device, operating information associated with an ongoing industrial process;
   determining, via the bot, that a portion of the operating information exceeds a particular threshold; and
   adjusting, via the bot, a setting of a device involved in the industrial process and associated with the portion of the operating information exceeding the particular threshold responsive to the determination.
16. The method of 15, wherein the method includes receiving the operating information responsive to a triggering condition.
17. The method of 16, wherein the triggering condition comprises:
   an alarm;
   an entry of the operating information into the computing device; or
   a received message.
18. The method of 15, wherein receiving the operating information includes performing a screen scraping operation on a display device associated with the computing device.
19. The method of 15, wherein receiving the operating information includes performing a character recognition operation on a display device associated with the computing device.
20. The method of 15, wherein receiving the operating information includes performing an object recognition operation on a display device associated with the computing device.

## Claims

1. A non-transitory computer-readable medium having instructions stored thereon executable by a processor to:
monitor an industrial process;
initiate a communication session with a user associated with the industrial process;
receive a query made by the user during the communication session regarding a portion of the industrial process; and
provide a response to the query during the communication session based, at least in part, on a current state of the industrial process.

2. The medium of claim 1, including instructions to initiate the communication session responsive to a user input.

3. The medium of any of claims 1-2, including instructions to initiate the communication session responsive to the process exceeding a particular threshold.

4. The medium of any of claims 1-3, wherein the instructions to provide the response to the query include instructions to:
initiate a test associated with the industrial process during the communication session; and
provide a result of the test during the communication session.

5. The medium of any of claims 1-4, wherein the instructions to provide the response to the query include instructions to:
pose a question associated with the query to a different user during the communication session;
provide an answer given by the different user during the communication session.

6. The medium of any of claims 1-5, wherein the industrial process is an installation associated with a device.

7. The medium of any of claims 1-5, wherein the industrial process is a delivery of a parcel.

8. The medium of any of claims 1-5, wherein the industrial process is an invoice process.

9. The medium of any of claims 1-5, wherein the industrial process is a power management process.

10. A system for providing bots for industrial processes, comprising:
a processor; and
a memory having instructions stored thereon which, when executed by the processor, cause the processor to:
determine operating information associated with an industrial process;
establish a communication session with a user associated with the industrial process;
receive a query made by the user during the communication session regarding a portion of the industrial process;
provide a response to the query during the communication session based, at least in part, on the determined operating information associated with the industrial process; and
adjust an aspect of the industrial process without user input responsive to a determination that the operating information associated with the industrial process exceeds a threshold.

11. The system of claim 10, including instructions to adjust a setting of a device involved in the industrial process.

12. The system of any of claims 10-11, wherein the instructions to determine the operating information of the industrial process include instructions to determine respective operating information associated with each of:
a server associated with the industrial process;
controllers associated with the industrial process;
sensors associated with the industrial process; and
communication devices associated with the industrial process.

13. The system of any of claims 10-12, wherein the instructions to determine the operating information of the industrial process include instructions to determine the operating information from a plurality of log files associated with, and shared by, the industrial process.

14. A method for providing bots for industrial processes, comprising:
receiving, via a bot executing on a computing device, operating information associated with an ongoing industrial process;
determining, via the bot, that a portion of the operating information exceeds a particular threshold; and
adjusting, via the bot, a setting of a device involved in the industrial process and associated with the portion of the operating information exceeding the particular threshold responsive to the determination.

15. The method of claim 14, wherein the method includes receiving the operating information responsive to a triggering condition, wherein the triggering condition comprises:
an alarm;
an entry of the operating information into the computing device; or
a received message.
